(19) Europäisches Patentamt / European Patent Office / Office européen des brevets

(11) **EP 4 768 315 A1**

(12) **EUROPEAN PATENT APPLICATION**

(43) Date of publication:
01.07.2026 Bulletin 2026/27

(21) Application number: 24223568.7

(22) Date of filing: 27.12.2024

(51) International Patent Classification (IPC):
**B60L 53/126** (2019.01)  **B60L 53/38** (2019.01)
**H02J 50/90** (2016.01)

(52) Cooperative Patent Classification (CPC):
**B60L 53/38; B60L 53/126; H02J 50/10;**
**H02J 50/90;** B60L 53/12; B60L 53/30; B60L 53/35;
H02J 2105/37

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **WiTricity AI Tech, LLC**
**Stuart, FL 34997 (US)**

(72) Inventor: **MARKMANN, Sergej**
**Midway, 31320 (US)**

(74) Representative: **HG Law International LLP**
**26-28 Bedford Row**
**London WC1R 4HE (GB)**

(54) **DETERMINING POSITIONING USING A WIRLESS POWER TRANSFER SIGNAL**

(57) A wireless power transfer (WPT) system for charging an electric vehicle is disclosed. The system includes a WPT coil, a positioning system, and control circuitry. The positioning system includes a positioning coil connected to a switch, wherein in a first switch state the switch is configured to connect the positioning coil to resistor circuitry, and in a second switch state the switch is configured to disconnect the positioning coil from the resistor circuitry. The control circuitry is configured to set the switch to the first switch state to connect the positioning coil to the resistor circuitry, activate the WPT coil to induce a voltage in the positioning coil, receive a measurement from the positioning coil, and determine a relative position between a vehicle assembly and a ground assembly of the WPT system based on the received measurement from the positioning coil.

**Description**

Field of the Invention

The technical field relates generally to wireless power transfer, and more specifically to devices, systems, and methods related to determining the position of a vehicle assembly with respect to a ground assembly during wireless power transfer.

Background

Wireless power transfer (WPT) for charging electric vehicles is described in detail in patents such as U.S. Patents 8,933,594, titled "Wireless energy transfer for vehicles," and 9,561,730, titled "Wireless power transmission in electric vehicles," which are incorporated here by reference in their entirety. More specifically, these patents refer to inductive WPT between a ground-based unit of a wireless charging station and a vehicle-based unit, herein also simply referred to as the ground unit or ground assembly and the vehicle unit or vehicle assembly, respectively.

Efficient and regulatory compliant WPT for electric vehicles requires a WPT coil in the vehicle unit to be aligned with a WPT coil in the ground unit within a specified tolerance zone. Some standards specify a tolerance zone of +/- 75 mm in x-direction (vehicle longitudinal axis) and +/- 100 mm in y-direction (vehicle lateral axis). Therefore, one aspect of WPT for charging electric vehicles to be addressed is assisting a user or an autonomous driving system to park and align the vehicle within the relatively tight tolerance zone sometimes also referred to as "charging spot". Such park assist system may also include guidance of the user or the autonomous driving system in steering the vehicle towards the ground unit.

A further aspect of WPT for electric vehicle charging to be addressed is establishing wireless communications between the vehicle and the wireless charging station from which the vehicle is attempting to charge. Standard compliant WPT for electric vehicles, requires the wireless charging station to communicate with the vehicle via a wireless communication network for purposes of WPT system control and other WPT-related functions (e.g., for the safety of the system). This communication is based on WiFi IEEE 802.11x using standardized protocols enabling interoperability. Establishing wireless communications may be particularly difficult in a parking facility with multiple wireless charging stations at which multiple EVs may be attempting to park at the same time. It is necessary to disambiguate the connections - that is, make sure that each vehicle is in communication with the wireless charging station it is attempting to use for charging, and not another e.g., neighboring station. This disambiguation is part of a process referred to as pairing and shall ensure that a wireless communication node (e.g., a WiFi client) associated to the vehicle communicates with a wireless communication node (e.g., a WiFi access point) associated to the right wireless charging station.

Summary

A WPT system may utilize inductive power transfer to transfer power between WPT units of the WPT system, such as between respective WPT units of a ground assembly and a vehicle assembly of a WPT system for charging EVs. For example, a WPT unit may be configured to transmit electrical power to another WPT unit, or receive from another WPT unit, power via the establishment of an electromagnetic near field, that is perceived by a receiving WPT unit positioned within a region near to the transmitting WPT unit. In some cases, such as grid to vehicle (G2V) charging, power is initially provided by a primary power source, for example, an electrical grid, to the transmitting WPT unit (e.g., a ground WPT unit), which in turn inductively transfers it to the receiving WPT unit (e.g., a vehicle WPT unit) to store it in a secondary source, for example, a power storage such as a battery of a vehicle. Similar principles apply for vehicle to everything (V2X) energy transfer. Irrespective of the direction of the energy transfer, the induction coils of the WPT units will typically be positioned close to each other and substantially aligned to achieve a strong degree of electromagnetic coupling and thus efficient energy transfer.

One problem that arises in this context is the alignment of one device to another, to enable efficient transfer of power. This alignment may be performed by a positioning system, such as a differential inductive positioning system (DIPS) comprising two or more coils, or an ultra-wide-band system. In the case where DIPS coils are used, these coils may operate to enable the system to determine the vertical, horizontal, and rotational positioning of one device to the other (e.g., of the VA to the GA). However, the position monitoring using the DIPS coils may be difficult under some circumstances, such as when the primary power transfer coil (WPT coil) is operating and the VA is charging.

Since the WPT system frequency operation is possible between 85kHz-90kHz and the DIPS signals for the horizontal field coils are specified between 111.5 kHz-117.5 kHz and the vertical field coils are in the range of 142 kHz-146 kHz, it is technically challenging to suppress the WPT signal without influencing the DIPS signals, and to extract the positioning information. Moreover, since a modulation is present on the horizontal field coils the effective spectral separation is between 90 kHz and 109.5 kHz (at least 2 kHz bandwidth of amplitude modulated signal) which makes it technically difficult to suppress the WPT with a notch- or the bandpass-filter if one considers the tolerance of the filter elements and the temperature range of operation.

In one approach, the system simply shuts off the primary WPT coil to perform positioning determinations. However, this process interrupts power transfer, and thus results in a less optimal power transfer.

Another approach may use an inertial measurement unit (IMU) to perform positioning measurement adjustments during charging. However, the IMU may drift over time, as well as drift based on temperature fluctuations, meaning that the positioning determination degrades over time.

Still other approaches may use separate devices or systems to perform positioning. However, these separate systems or devices add complexity and cost, and may not operate in all conditions. There exists a need for a process to perform positioning determinations while charging - that is, while the WPT coil is active.

An example wireless power transfer (WPT) system for charging an electric vehicle is described below. The example system includes a WPT coil, a positioning system, and control circuitry. The positioning system includes a positioning coil connected to a switch, wherein in a first switch state the switch is configured to connect the positioning coil to resistor circuitry, and in a second switch state the switch is configured to disconnect the positioning coil from the resistor circuitry. The control circuitry is configured to set the switch to the first switch state to connect the positioning coil to the resistor circuitry, and to activate the WPT coil to induce a voltage in the positioning coil. The control circuitry is also configured to receive a measurement from the positioning coil (e.g., based on the induced voltage from the coupling of the positioning coil to the WPT coil), and to determine a relative position between a vehicle assembly and a ground assembly of the WPT system based on the received measurement from the positioning coil.

In some embodiments, the positioning system of the WPT system further comprises at least three positioning coils, each connected to a respective resistor circuitry. The control circuitry is then further configured to activate the WPT coil to induce a voltage in each of the at least three positioning coils, receive a respective measurement from each of the at least three positioning coils (e.g., based on the induced voltage in each coil), and to determine the relative position between the vehicle assembly and the ground assembly of the WPT system based on the respective measurements from the at least three positioning coils.

In some embodiments, the positioning system of the WPT system further comprises four positioning coils, each connected to a respective resistor circuitry. The control circuitry is then further configured to activate the WPT coil to induce a voltage in each of the four positioning coils, receive a respective measurement from each of the four positioning coils (e.g., based on the induced voltage in each coil), and to determine the relative position between the vehicle assembly and the ground assembly of the WPT system based on the respective measurements from the four positioning coils.

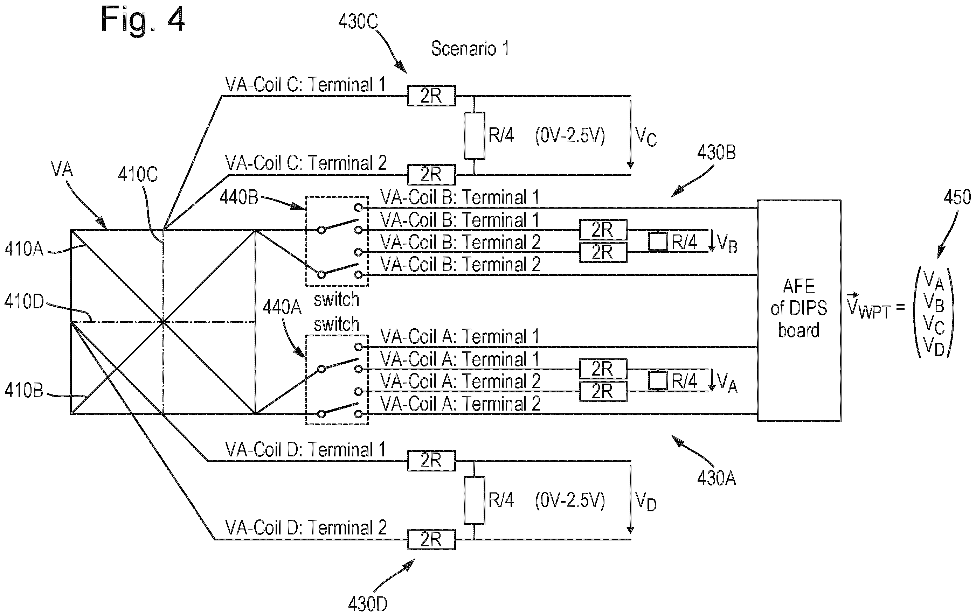

Further, where the positioning system comprises four positioning coils, in some embodiments the four positioning coils are linear in shape when viewed from above (e.g., as shown in FIG. 4. Alternatively, one or more of the positioning coils may be realized as a solenoid coil or a planar coil on a printed circuit board (PCB). Additionally, in some embodiments, a first positioning coil may be perpendicular to a second positioning coil of the four positioning coils, and a third positioning coil may be perpendicular to a fourth positioning coil of the four positioning coils. Additionally, in some embodiments, the first positioning coil and the second positioning coil are each rotationally offset from the third positioning coil and the fourth positioning coil by 45 degrees. It should be appreciated that the orientation described above is for example only, and other orientations and arrangements of positioning coils may be used instead.

In some embodiments, where the positioning system comprises four positioning coils, the first positioning coil, second positioning coil, third positioning coil, and fourth positioning coil each intersect at a center of the WPT coil. In other embodiments, the first positioning coil and the second positioning coil intersect at a first position with respect to the WPT coil, and the third positioning coil and the fourth positioning coil intersect a second position with respect to the WPT coil, wherein the first position is different from the second position. In still other embodiments, the first positioning coil is parallel to the third positioning coil, and the second positioning coil is parallel to the fourth positioning coil.

In some embodiments, the positioning coil of the positioning system is a first differential inductive positioning system (DIPS) coil connected to a first respective switch, and the positioning system further comprises a second DIPS coil connected to a second respective switch. The control circuitry is then further configured to set the first respective switch and the second respective switch to respective first switch states to connect the first DIPS coil and the second DIPS coils to respective resistor circuitries. The control circuitry is then configured to activate the WPT coil to induce a respective voltage in each of the first DIPS coil and the second DIPS coil, receive a respective measurement from each of the first DIPS coil and the second DIPS coil (e.g., based on the induced voltage from the WPT coil), and to determine the relative position between the vehicle assembly and the ground assembly of the WPT system based on the received measurements from the first DIPS coil and the second DIPS coil.

In some embodiments, the measurement from the positioning coil comprises an amplitude of a coupling of the positioning coil to the WPT coil when the WPT coil is activated.

In another embodiment, a method of performing position determination between a vehicle assembly and a ground assembly of a wireless power transfer (WPT) system for charging an electric vehicle is described. The method includes determining that a WPT coil is inactive. The method also includes determining an initial position of the vehicle assembly with respect to the ground assembly using a positioning system, the positioning system comprising a positioning coil connected to a switch, wherein in a first switch state the switch is configured to connect the positioning coil to resistor circuitry, and in a second switch state the switch is configured to disconnect the positioning coil from the resistor circuitry. The method also includes setting the switch to the first switch state, to connect the positioning coil to the resistor circuitry. The resistor circuitry may provide a high resistance to the circuitry such that there will be negligible current flow, and thereby reducing the impact of magnetic coupling between the positioning coils. Without the resistor circuitry, the WPT coil may cause a significant current in the positioning coils, which may cause a coupling between all of the positioning coils, which makes the measurements described below more difficult. The method further includes activating the WPT coil to induce a voltage in the positioning coil, receiving a measurement from the positioning coil while the WPT coil is active, and determining a refined position between of the vehicle assembly with respect to the ground assembly of the WPT system based on the received measurement from the positioning coil.

In some embodiments, the method further includes, after determining the initial position of the vehicle assembly with respect to the ground assembly, updating the initial position based on measurements from an inertial measurement unit (IMU) of the vehicle assembly.

In another embodiment, a vehicle assembly for a wireless power transfer (WPT) system for charging an electric vehicle is described. The vehicle assembly includes a WPT coil. The vehicle assembly also includes a positioning system comprising a positioning coil connected to a switch, wherein in a first switch state the switch is configured to connect the positioning coil to resistor circuitry, and in a second switch state the switch is configured to disconnect the positioning coil from the resistor circuitry. The vehicle assembly further includes control circuitry configured to set the switch to the first switch state to connect the positioning coil to the resistor circuitry. The control circuitry is further configured to activate the WPT coil to induce a voltage in the positioning coil, receive a measurement from the positioning coil, and determine a relative position between the vehicle assembly and a ground assembly of the WPT system based on the received measurement from the positioning coil.

In another embodiment, a ground assembly for a wireless power transfer (WPT) system for charging an electric vehicle is described. The ground assembly includes a WPT coil. The ground assembly also includes a positioning system comprising a positioning coil connected to a switch, wherein in a first switch state the switch is configured to connect the positioning coil to resistor circuitry, and in a second switch state the switch is configured to disconnect the positioning coil from the resistor circuitry. The ground assembly further includes control circuitry configured to set the switch to the first switch state to connect the positioning coil to the resistor circuitry. The control circuitry is further configured to activate the WPT coil to induce a voltage in the positioning coil, receive a measurement from the positioning coil, and determine a relative position between a vehicle assembly and the ground assembly of the WPT system based on the received measurement from the positioning coil.

Brief Description of the Drawings

The above and other objects and advantages of the disclosure will be apparent upon consideration of the following detailed description, taken in conjunction with the accompanying drawings, in which:

FIG. 1 illustrates an example parking facility with multiple wireless charging stations for use by electric vehicles, in accordance with some examples of the disclosure;

FIG. 2 illustrates a hierarchical block diagram of an example wireless power transfer system for wireless electric vehicle charging, in accordance with some examples of the disclosure;

FIGS. 3A-B illustrates graphs of the measured coupling of first and second DIPS coils to the WPT coil, in accordance with some examples of the disclosure;

FIG. 4 illustrates an example diagram of portions of a vehicle assembly configured to determine a positioning vector, in accordance with some examples of the disclosure;

FIGS. 5A-D illustrate graphs showing the coupling of the WPT coil to the four respective positioning coils shown in FIG. 4, in accordance with some examples of the disclosure;

FIG. 6 illustrates a chart showing the status of various coils and components of a vehicle assembly and/or a ground assembly during a parking and charging operation, in accordance with some examples of the disclosure;

FIGS. 7A-B illustrate two alternative positioning coil arrangements, in accordance with some examples of the disclosure;

FIG. 8 illustrates a flowchart of an example process of determining the position of a vehicle assembly with respect to a ground assembly using the techniques disclosed herein, in accordance with some examples of the disclosure.

Detailed Description

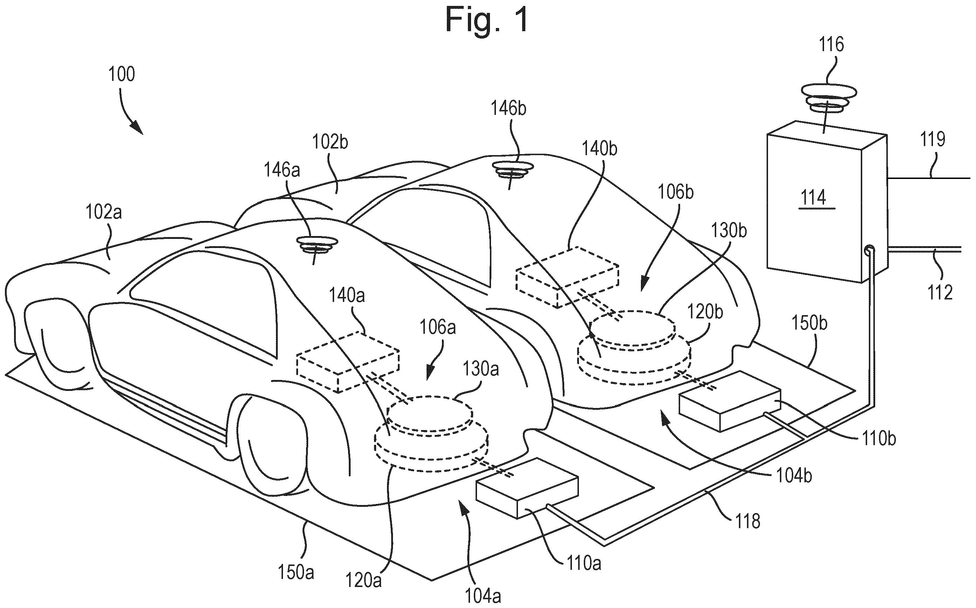

FIG. 1 illustrates an example of a parking facility 100 providing wireless charging services in parking spots 150a and 150b, including a plurality of WPT systems suitable for use in systems and methods of the present disclosure. Two wireless charging-enabled vehicles, 102a, 102b integrating WPT vehicle units 130a, 130b are each parked over a WPT ground unit, 120a, 120b. Both vehicle unit and ground unit include a WPT coil (not shown) sometimes also referred to as an induction coil configured to wirelessly transfer power based on the Faraday induction principle. Both vehicle unit and ground unit also include respective portions of a position detection system. In some implementations, the ground units are surface mounted on the floor. In other implementations, the ground units are flush mount with the floor or buried in the ground (e.g., in the asphalt). The power converters 110a, 110b convert power received by WPT vehicle units 130a, 130b to a form suitable for charging the vehicle's traction battery (not shown). In some examples and as described in U.S. Patent US 9,561,730 B2, the power converters 140a, 140b may be integrated with power converters used for plug-in charging of the vehicle, commonly called on-board chargers (OBC), or other on-board vehicle components. The WPT ground units 120a, 120b are shown linked to external power converters 110a, 110b, each connected to a power supply bus 118. In some implementations, the power converters 110a, 110b are configured and mounted as a "wall box." In other implementations, the power converters or parts thereof are integrated into the WPT ground units. The power supply bus 118 is in turn connected to a central power distribution unit 114. In some implementations and operations, the central power distribution unit 114 receives power from a power utility 112 sometimes referred to as "power grid" and provides DC power to the bus 118, and the power converters 110a, 110b are inverters, such as the multi-level inverter described in provisional U.S. Application 18/486,830, filed October 13, 2023, and incorporated here by reference. The power converters 110a, 110b, provide low-frequency (LF) power signals, such as the 85 kHz signals used for WPT according to the SAE J2954 standard, to the WPT ground units 120a, 120b, to turn into LF magnetic fields for WPT. In other examples, the power distribution unit 114 provides the LF signals directly to each WPT ground unit, and power converters 110a, 110b are simpler or not present. In yet other examples, the power distribution unit 114 and bus 118 are not present, and the power converters 110a, 110b are each connected directly to the power utility 112 and convert AC power from the utility to LF power for wireless power transfer. The combination of a WPT ground unit (e.g., 120a), a power converter (e.g., 110a), and any other ground-side electronics (not shown) constitutes a wireless charging station (e.g., 104a) as indicated in FIG. 1. In some cases, the WPT ground units 120a, 120b are also referred to as Ground Assembly Resonators (GAR) or ground assembly pads, and the wireless charging station is also referred to as a Ground Assembly (GA) or Electric Vehicle Supply Equipment (EVSE). Analogously, the WPT vehicle units 130a, 130b are sometimes referred to as Vehicle Assembly Resonators (VAR) or vehicle assembly pads and the combination of a WPT vehicle unit (e.g., 130a) and a power converter (e.g., 140a) and any other vehicle-side electronics (not shown) constitutes a Vehicle Assembly (VA) (e.g., 106a, 106b). Each of the power connections shown may be bi-directional, allowing the vehicles to discharge power from their batteries to the power utility 112 in a vehicle-to-grid (V2G), or other load in a vehicle-to-home (V2H), vehicle-to-vehicle (V2V) or similar arrangement (generally V2X).

FIG. 1 also illustrates vehicles 102a, 102b, and power distribution unit 114 providing wireless communication units 146a, 146b, and 116, respectively. The wireless communication unit 116 may be configured to wirelessly communicate with the vehicles 102a and 102b e.g., based on a Wi-Fi IEEE 802.11x standard. In SAE standard conformant wireless charging systems, this communication is used for exchanging data between the GA and VA for purposes of WPT control and safety. Further, the power distribution unit 114 provides an interface 119 configured to communicate with external entities (e.g., a charging operation center) via a communication backhaul (not shown). This backhaul may rely on radio communications (e.g., via communication unit 116), power line communications (e.g., via power utility 112), or any other line communications including fiber optical. In the example parking facility 100, wireless communication unit 116 is configured to serve multiple vehicles. In other parking facilities, each of the wireless charging stations 104a, 104b provide a wireless communication unit (not shown) configured to communicate with the respective vehicles 102a, 102b.

Beside the WPT coil, the WPT ground units 120a, 120b or the WPT vehicle units 130a, 130b, or both may include various sensors and detection systems (not shown). For example, they may include systems for detecting a positional relationship between the vehicle unit and the ground unit. The positional relationship is needed to guide the vehicle to the charging spot, to mutually align the vehicle-side and groundside WPT coils within the specified tolerance, and for pairing of a vehicle with a wireless charging station as needed to establish communication between the right entities in multiple vehicle multiple charging station scenarios. The ground unit may also include sensors and detection systems to determine presence of a foreign object that has the potential to heat up by induction heating or any hazardous events caused by an incandescent object on the surface of the ground unit. Further, it may include sensors and a detection system for determining presence of a living object e.g., a hand of a person or animals approaching a critical space beneath the vehicle where electromagnetic field exposure exceeds certain limits (e.g., based on IEEE or ICNIRP guidelines). Moreover, the ground unit may include sensors and a detection system for determining a presence of the vehicle or a type of the vehicle. In some implementations, sensors and detection systems or parts thereof may be external to the ground unit or vehicle unit. The systems and methods disclosed herein may improve the process of positioning the vehicle, e.g., vehicle 102a, 102b, relative to a charging spot. Additionally or alternatively, systems and methods disclosed herein may improve wireless communications between the vehicle and the wireless charging station from which the vehicle is attempting to charge.

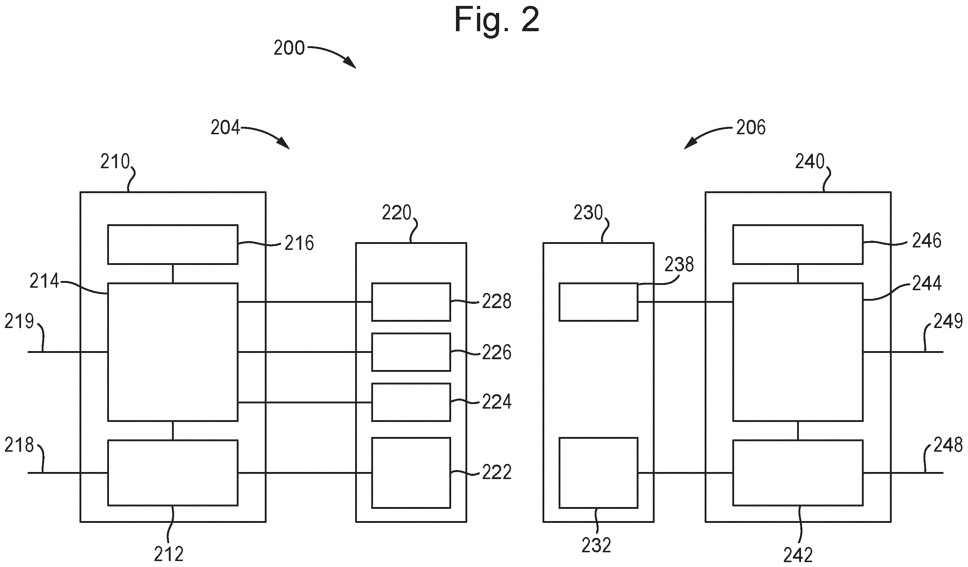

FIG. 2 is a hierarchical block diagram of an example WPT system 200 for wireless electric vehicle charging. At the top hierarchy level, the system 200 comprises a GA 204 and a VA 206 that may refer to the wireless charging station 104a and the VA 106a, respectively, of FIG. 1. The next lower level shows the GA 204 composed of a GA power conversion & control unit 210 and a WPT ground unit 220 (e.g., 120a of FIG. 1) and various connections between these blocks. Splitting the GA into two blocks implies implementations where the GA power conversion & control unit and the ground unit are physically separated (as illustrated in FIG. 1) and interconnected via a several meters long multiwire cable herein referred to as GA feeder cable (not shown). However, it should not exclude implementations where the GA power conversion & control unit is entirely or partially integrated in the ground unit forming one physical unit with a common housing (not shown).

At the third level, the GA power conversion & control unit includes a GA power converter 212 (e.g., 110a of FIG. 1), a GA controller 214, and a GA wireless communication unit 216. The ground unit 220 integrates a GA WPT coil 222 as well as various functions as needed for Foreign Object Detection (FOD), Living Object Detection (LOD), Vehicle Detection (VD), and Position Detection (PD) as previously discussed with reference to FIG. 1. In the example of FIG. 2, these functions are provided by a FOD unit 224, a LOD unit 226, and a GA PD unit 228, each configured and connected to the GA controller for exchanging data and control. In some implementations such as described in Patent US 11,914,094 and incorporated here by reference, these functions share or partially share one common hardware platform referred to as a multi-purpose detection system.

In an implementation conforming with the SAE standard, the GA wireless communication unit 216 is a WiFi Access Point providing an air interface to a Wireless Local Area Network (WLAN) of a parking facility. Certain parking facilities (e.g., parking facility 100 of FIG. 1) provide a central WiFi access point associated to multiple GAs. In such implementations, the GA wireless communication unit 216 is external to the GA 204. In another implementation, the GA wireless communication unit is integral part of the ground unit 220.

The GA WPT coil 222 may include a tuning & impedance matching network (not shown) forming a resonant circuit and the ground-unit is referred to as the GAR as previously mentioned. In other implementations, the tuning & impedance matching network or parts thereof are included in the GA power converter 212. Further, the GA controller 214 interfaces to the GA power converter 212 and the GA wireless communication unit 216 for data exchange and system control. It also provides a data interface 219 (e.g., Ethernet) to communicate with a system external entity e.g., via a backbone network as mentioned with reference to FIG. 1. Moreover, the GA power converter 212 disposes a power interface 218 for feeding or receiving AC or DC power as discussed with reference to FIG. 1.

At the second level, FIG. 2 shows the VA 206 composed of a WPT vehicle unit 230 (e.g., 106a of FIG. 1) connected to a VA power conversion & control unit 240. At a third level, the VA power conversion & control unit 240 comprises a VA power converter 242 (e.g., 108a of FIG. 1), a VA controller 244, and a VA wireless communication unit 246. The vehicle unit 230 comprises a VA WPT coil 232 and a VA PD unit 238, the vehicle-side counterpart of the GA PD unit 228 interfacing with the VA controller for data exchange and control. Splitting the VA into two blocks implies implementations where the VA power conversion & control unit and the vehicle unit are physically separated (as illustrated in FIG. 1) and interconnected via a multiwire cable herein referred to as VA feeder cable (not shown). However, this should not exclude implementations where the VA power conversion & control unit 240 is entirely or partially integrated in the vehicle unit 230 forming one physical unit with a common housing (not shown).

In a standard-conforming implementation, the VA wireless communication unit 246 is a WiFi Client. As with the GA wireless communication unit, the VA wireless communication unit may be external to the VA 206, e.g., mounted anywhere on the vehicle or parts or it may be partially or fully integrated into the vehicle unit.

In some implementations, the VA WPT coil 232 includes a tuning & impedance matching network (not shown) forming a resonant circuit and the vehicle unit is referred to as the VAR as previously mentioned. Further, the VA controller interfaces to the VA power converter and the VA wireless communication unit for data exchange and control. It also provides a line communication interface 249, e.g., a CAN bus interface to communicate with an external vehicle onboard entity. Moreover, the VA power converter disposes a power interface 248 for feeding or receiving DC power as previously discussed with reference to FIG. 1.

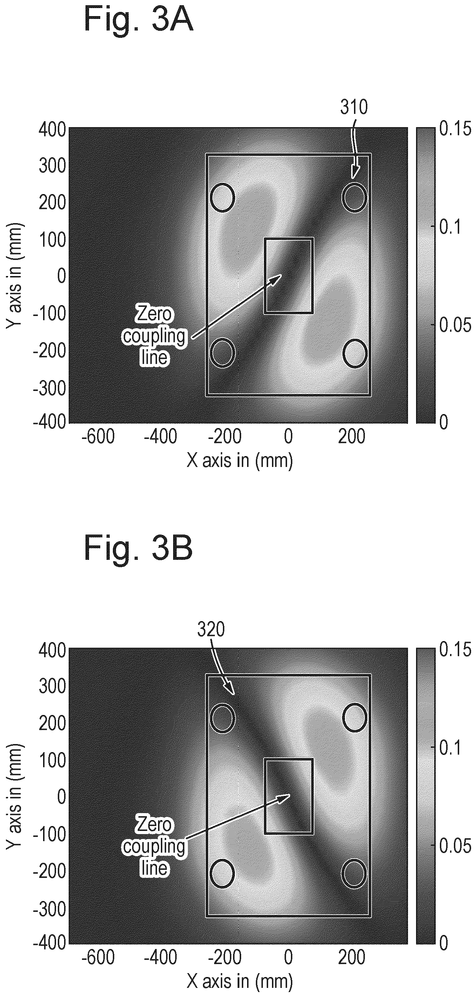

FIGS. 3A-B illustrates graphs of the measured coupling of respective first (FIG. 3A) and second (FIG. 3B) positioning coils to the primary WPT coil of a system for charging an electric vehicle, in accordance with some examples of the disclosure. For example, FIG. 3A may illustrate the coupling of a first positioning coil (e.g., positioning coil 410A of FIG. 4) to the primary WPT coil (e.g., a WPT coil of FIG. 4), and FIG. 3B may illustrate the coupling of a second positioning coil (e.g., positioning coil 410B of FIG. 4) to the primary WPT coil (e.g., a WPT coil of FIG. 4).

As shown in FIG. 4, the positioning coils may be linear in shape. In some embodiments, the positioning coils may take another shape, such as circular, spiral, or some other shape. Additionally, in some embodiments one or more of the positioning coils may be differential inductive positioning system (DIPS) coils. In other embodiments, one or mor of the positioning coils may be used with an ultra-wide-band positioning system, or any other suitable positioning system. Regardless of the particular positioning technique that is used, each positioning coil may be configured to couple to the primary WPT coil such that when the WPT coil is active, it introduces a corresponding voltage in the positioning coil that can be measured to determine the relative position of the VA with respect to the GA, as described in greater detail below.

Referring back to FIGS. 3A-B, these graphs show the measured coupling between the GA WPT coil and two respective positioning coils (e.g., DIPS coils 410A and 410B). Although the coupling strength can be measured in all directions over the ground assembly pad, the region of interest comprises a box approximately X=+/-75mm and Y= +/-100mm from a center of the WPT coil. As can be seen in FIGS. 3A and 3B, within this region of interest there is a diagonal sharp line (e.g., lines 310, 320) that aligns with the respective positioning coil, indicating an area of zero coupling. The zero-coupling line indicates the line for which a zero measurement will be detected when the WPT coil is activated, which prevents the relative positioning between the VA and the GA from being determined in this area. That is, if the VA includes two positioning coils (e.g., positioning coils 410A and 410B), and the VA is located such that the positioning coils intersect at the center of the WPT coil, it may be difficult to accurately determine the position of the VA based solely on measurements of the coupling between the active WPT coil and the two positioning coils.

Given the presence of a zero-coupling line for each positioning coil, this disclosure provides several different arrangements and numbers of positioning coils that cause the positioning system to be able to determine relative VA and GA positioning throughout the entire region of interest.

FIG. 4 illustrates an example diagram of portions of a vehicle assembly configured to determine a positioning vector 450, which may then be used to determine the relative position of the VA with respect to the GA, in accordance with some examples of the disclosure. The embodiment shown in FIG. 4 is illustrated with respect to features of the vehicle assembly, however it should be appreciated that the same structure and functions may similarly be part of and performed with respect to the ground assembly.

FIG. 4 illustrates a positioning system including a first positioning coil 410A, a second positioning coil 410B, a third positioning coil 410C, and a fourth positioning coil 410D. The system of FIG. 4 may also include a WPT coil (not shown) which when activated, causes an induced voltage in one or more of the positioning coils 410A-D. It should be appreciated that while four positioning coils are shown in the illustrated embodiment, other embodiments may include one, two, three, five, or more positioning coils. Additionally, one or more embodiments may include a single WPT coil, two WPT coils, or more.

When operating the WPT system, the WPT coil may provide an induced voltage at the positioning coils (e.g., 410A-D) that may be up to or greater than 35V. In order to reduce this voltage to a level at which the appropriate measurements may be made by the control circuitry, one or more positioning coils may be connected to a resistor circuit (e.g., 430A-D). As shown in FIG. 4, positioning coil 410A is connected to resistor circuitry 430A, positioning coil 410B is connected to resistor circuitry 430B, positioning coil 410C is connected to resistor circuitry 430C, and positioning coil 410D is connected to resistor circuitry 430D. These resistor circuits reduce the induced voltage in each of the positioning coils to a signal on the order of 2.5V, which can be measured by the analog-to-digital converter (ADC) of the WPT system on the VA side. In some examples, each resistor circuit includes resistors having values in the range of several tens of kOhms up to several MOhms.

When the WPT coil is activated, causing power to be transferred between the VA and GA, it induces a voltage in each of the positioning coils 410A-D. The control circuitry (which may include an ADC) may receive measurements from each of the positioning coils 410A-D, and may output a four-dimensional voltage vector:

$$\vec{V}_{WPT} = \begin{pmatrix} V_A \\ V_B \\ V_C \\ V_D \end{pmatrix}$$

In some examples, positioning coils 410A and 410B may be DIPS coils. Each of these DIPS coils may be connected to a respective switch (e.g., switches 440A and 440B), which selectively connect the DIPS coils 410A and 410B to their corresponding resistor circuitries 430A and 430B. In a first switch state, each of the DIPS coils 410A and 410B may be disconnected from the respective resistor circuitries 430A and 430B. By disconnecting the DIPS coils from the resistor circuitries, the DIPS coils 410A and 410B may be configured to determine positioning information using the standard DIPS techniques. That is, if the WPT coil is turned off or deactivated, and is not inducing a voltage on the DIPS coils 410A and 410B, the WPT system may use the standard DIPS technique to determine the relative position of the VA with respect to the GA using the DIPS coils 410A and 410B. However, when the position of the VA with respect to the GA is desired while the WPT coil is active, the control circuitry may set each of the switches 440A and 440B to respective second switch states, thereby connecting the DIPS coils 410A and 410B to the respective resistor circuitries 430A and 430B. This then enables the system to determine the relative position of the VA with respect to the GA using the induced voltage from the active WPT coil in each of the positioning coils.

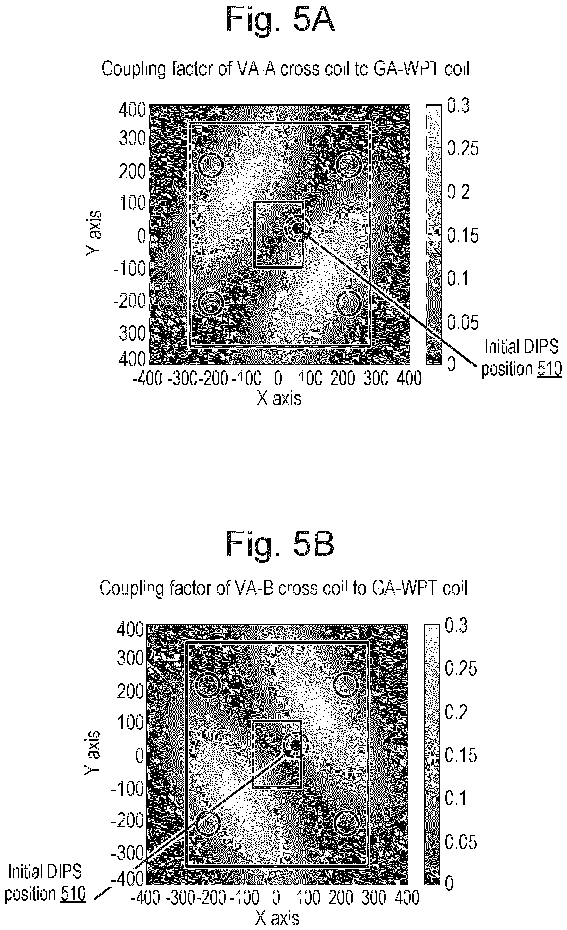

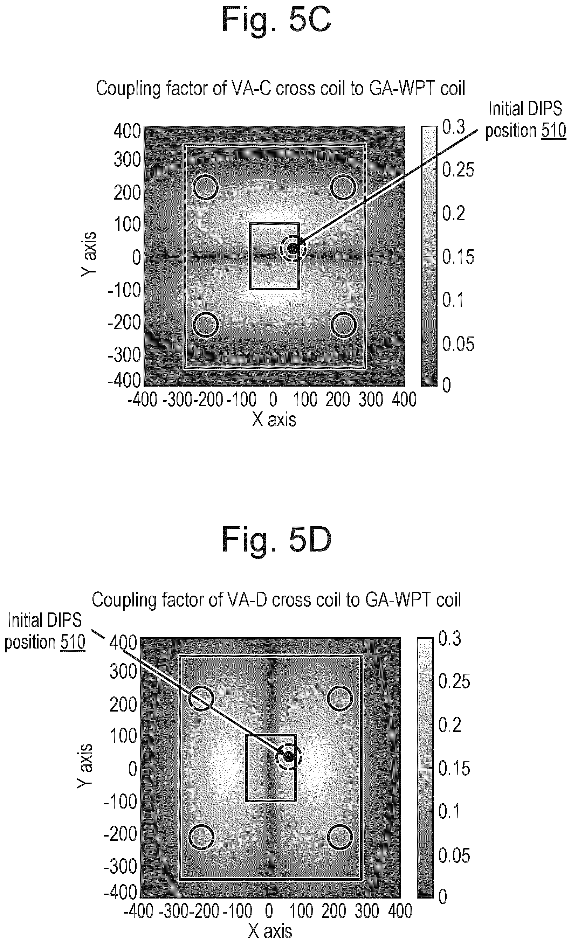

FIGS. 5A-D illustrate graphs showing the respective coupling of the WPT coil to each of the four respective positioning coils 410A-D shown in FIG. 4, in accordance with some examples of the disclosure. In this illustrated embodiment, the initial VA position 510 is determined by the DIPS system while the WPT coil is turned off. That is, an initial DIPS positioning determination is made using positioning coils 410A and 410B, while the WPT coil is turned off. This may occur in a situation where a VA approaches a GA to begin charging. The WPT system may initially use a standard DIPS positioning approach for this situation, given that the WPT coil is not activated and power transfer between the VA and GA has not yet begun. Once an initial VA position is determined, the WPT system may wish to perform power transfer using the WPT coil. However, to do so, the DIPS system must be switched off, because the DIPS coils alone will be overwhelmed by the voltage induced by the WPT coil.

Once the initial position 510 is determined, the WPT system may switch off the DIPS system and continue monitoring within a small region surrounding the position 510, while the WPT coil is active. When the WPT coil is active, FIGS. 5A-D illustrate the corresponding coupling strength at each location for the respective positioning coils 410A-D. As can be seen, for a given coupling strength measurement (e.g., a measurement of the induced voltage for a particular coil), there are multiple possible locations that may result. For example, if positioning coil 410A provides a measurement of zero, the only determination that can be made is that the VA is positioned somewhere along the zero-crossing line of FIG. 5A. Given this knowledge of the measurements provided by each positioning coil, and the corresponding possible VA locations, the WPT system can extract or disambiguate a VA location based on measurements from as few as three different positioning coils. Each additional coil provides added robustness to the system, allowing for more accurate and precise position determinations. In the illustrated embodiments, four positioning coils are shown to better illustrate the salient features.

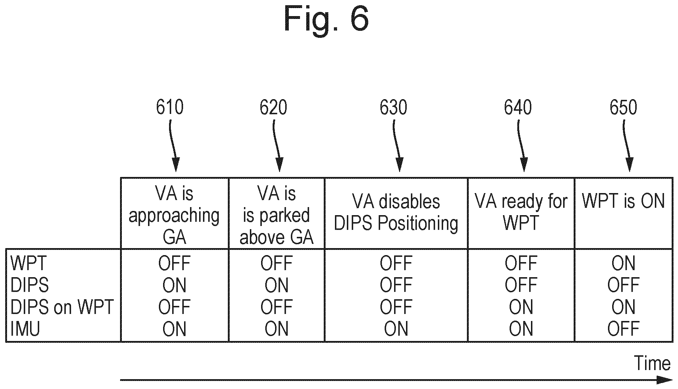

FIG. 6 illustrates a chart showing the status of various systems and coils of the WPT system of a vehicle assembly and/or a ground assembly during a parking and charging operation, in accordance with some examples of the disclosure. Steps 610-650 illustrate different steps as a VA approaches a GA and begins charging, as well as the state of the various coils and positioning systems used by the VA and/or GA.

At 610, the VA approaches the GA from a distance with the intent of wirelessly charging the vehicle. In this initial state, the WPT coil is turned off, the DIPS coils are turned on (e.g., coils 410A-B) and disconnected from the resistor circuits 430A-B by the respective switches 440A-B. Additionally, the vehicle IMU (which may be used to update positioning based on the vehicle accelerometer or other sensors) is turned on. The vehicle (and/or driver) navigates to the GA pad using the DIPS signals from positioning coils 410A-B, as well as the vehicle IMU.

At 620, when the VA is parked above the GA pad and is properly aligned, the VA measures the last position when it is at rest. This position is $P(x_0,y_0,z_0)$. This position may be used to determine the region of interest over which the VA position should be determined while the WPT coil is active, based on the coupling measurements from each of the positioning coils.

At 630, in preparation for the start of power transfer to the VA via the WPT coil, the VA disables the DIPS positioning system. The VA is unable to perform the standard DIPS positioning using positioning coils 410A-B while the WPT coil is active (e.g., during power transfer), so the VA may preemptively turn off the DIPS system. During the time when the DIPS system is deactivated, the VA may update the positioning information using the onboard IMU. However, the IMU may not be able to provide accurate positioning information over a long time period, due to drift in the IMU over time and due to temperature fluctuations.

At 640, once the DIPS system is turned off, the DIPS on WPT system may be turned on. That is, with respect to FIG. 4, the control circuity may activate the switches 440A-B to connect the positioning coils 410A-B to the resistor circuitry 430A-B. In this configuration, all of the positioning coils 410A-D are connected to respective resistor circuits 430A-D, which enables the system to determine the VA position based on the coupling measurements from the voltage induced by the WPT coil.

At 650, the WPT coil is activated, enabling power to transfer from the GA to the VA to charge the vehicle. The coupling of the WPT coil to the positioning coils causes an induced voltage in the positioning coils, which can be measured. The measured values are illustrated as the vector $\vec{V}_{WPT}$ shown in FIG. 4. At this point, the IMU may be deactivated or shut off, because additional positioning measurements can be determined from the positioning system.

In order to determine the relative VA position based on the measured values (e.g., vector $\vec{V}_{WPT}$), the control circuitry performs one or more calculations. To consider how these calculations are done, the system determines the mutuals M which can be obtained either from the measurements of the positioning coils (e.g., 410A-D) or from a simulation. FIGS. 5A-D can therefore be recomputed in terms of mutuals. This means that the initial position $P(x_0,y_0,z_0)$, which is indicated in FIG. 4 as position 510, corresponds to a mutual $M_A(x_0,y_0,z_0)$, $M_B(x_0,y_0,z_0)$, $M_C(x_0,y_0,z_0)$, $M_D(x_0,y_0,z_0)$. Since the vehicle is known to be at rest, the true position of the vehicle can be only slightly moved around $P(x_0,y_0,z_0)$ or changed in height. The area of search (or region of interest) is therefore limited and indicated with a dashed circle in FIGS. 5A-D. The WPT system also knows that the measured WPT voltage vector is given by following equation:

$$\vec{V}_{WPT}(x,y,z,t) = \begin{pmatrix} V_A(x,y,z,t) \\ V_B(x,y,z,t) \\ V_C(x,y,z,t) \\ V_D(x,y,z,t) \end{pmatrix} = \begin{pmatrix} \omega M_A(x,y,z)I_{GA}(t) \\ \omega M_B(x,y,z)I_{GA}(t) \\ \omega M_B(x,y,z)I_{GA}(t) \\ \omega M_B(x,y,z)I_{GA}(t) \end{pmatrix}$$

It should be appreciated that the mutuals M may depend on the vehicle rotation angle. However, for simplicity in this disclosure we assume a rotation angle of zero.

At time $t_0$ we know that the vehicle is located at position $P(x_0,y_0,z_0)$. At time ti we can measure the WPT voltage vector again. Two scenarios may occur with the second measurement of the WPT voltage vector. If the measured WPT voltage vector at time ti is linearly dependent on the WPT voltage vector at time step $t_0$, that indicates a change in the WPT current, but not a change in position. The equation below reflects that when the second WPT voltage measurement is linearly dependent, the current has changed, but there has been no change in position of the VA with respect to the GA.

$\vec{V}_{WPT}(t_1) = a \cdot \vec{V}_{WPT}(t_0), \quad a \epsilon \mathbb{R} \rightarrow$ linear dependence and hence change in the $I_{GA}$

In the second scenario, if the second WPT voltage vector measurement is not linearly dependent on the first WPT voltage vector measurement, (e.g., $\vec{V}_{WPT}(t_1) \neq a\vec{V}_{WPT}(t_0)$) that indicates that there has been a change in one or more of $M_A$, $M_B$, $M_C$, $M_D$ and hence a change in the x, y, z position. The control circuitry can compute the ratio of measured voltages as follows:

$$\frac{V_A(x_1,y_1,z_1,t_1)}{V_A(x_0,y_0,z_0,t_0)} = \frac{M_A(x_1,y_1,z_1,t_1)}{M_A(x_0,y_0,z_0,t_0)} = k_A$$

$$\frac{V_B(x_1,y_1,z_1,t_1)}{V_B(x_0,y_0,z_0,t_0)} = \frac{M_B(x_1,y_1,z_1,t_1)}{M_B(x_0,y_0,z_0,t_0)} = k_B$$

$$\frac{V_C(x_1,y_1,z_1,t_1)}{V_C(x_0,y_0,z_0,t_0)} = \frac{M_C(x_1,y_1,z_1,t_1)}{M_C(x_0,y_0,z_0,t_0)} = k_C$$

$$\frac{V_D(x_1,y_1,z_1,t_1)}{V_D(x_0,y_0,z_0,t_0)} = \frac{M_D(x_1,y_1,z_1,t_1)}{M_D(x_0,y_0,z_0,t_0)} = k_D$$

And from the computed ratios, the control circuitry can compute new Mutuals:

$$M_A(x_1,y_1,z_1,t_1) = k_A \cdot M_A(x_0,y_0,z_0,t_0)$$

$$M_B(x_1,y_1,z_1,t_1) = k_B \cdot M_B(x_0,y_0,z_0,t_0)$$

$$M_C(x_1,y_1,z_1,t_1) = k_C \cdot M_C(x_0,y_0,z_0,t_0)$$

$$M_D(x_1,y_1,z_1,t_1) = k_D \cdot M_D(x_0,y_0,z_0,t_0)$$

Since, in this example, positioning is realized in 4D space of known mutuals, an inverse function and/or look-up table may provide the x, y, z position at time ti. It should be noted that the inverse transformation from mutuals to x, y, z coordinates is realized on a limited space (e.g., the region of interest surrounding the initial position 510), which ensures injective mapping.

FIG. 4 illustrates a first example positioning coil arrangement that includes four positioning coils 410A-D. It should be appreciated that the relative VA positioning determination described above may be performed with as few as three positioning coils and corresponding measurements. Various positioning coil numbers and arrangements may be used in order to eliminate or reduce the area of zero-crossing overlap between positioning coils.

As shown in FIG. 4, the positioning system includes four positioning coils 410A-D, each having a linear shape. Positioning coils 410A and 410B are perpendicular to each other, and positioning coils 410C and 410D are perpendicular to each other. Positioning coils 410A and 410B are rotationally offset from positioning coils 410C and 410D by 45 degrees. Positioning coils 410A-D intersect at a center of the WPT coil. It should be appreciated that one or more positioning coils may be rotationally offset by some other amount. Additionally, one or more positioning coils may be perpendicular to another positioning coil, or may be oriented at some other angle with respect to another positioning coil (e.g., the positioning system need not include two sets of perpendicular positioning coils). Additionally, one or more positioning coils may intersect at some other position with respect to the WPT coil (e.g., the positioning coils need not intersect the center of the WPT coil).

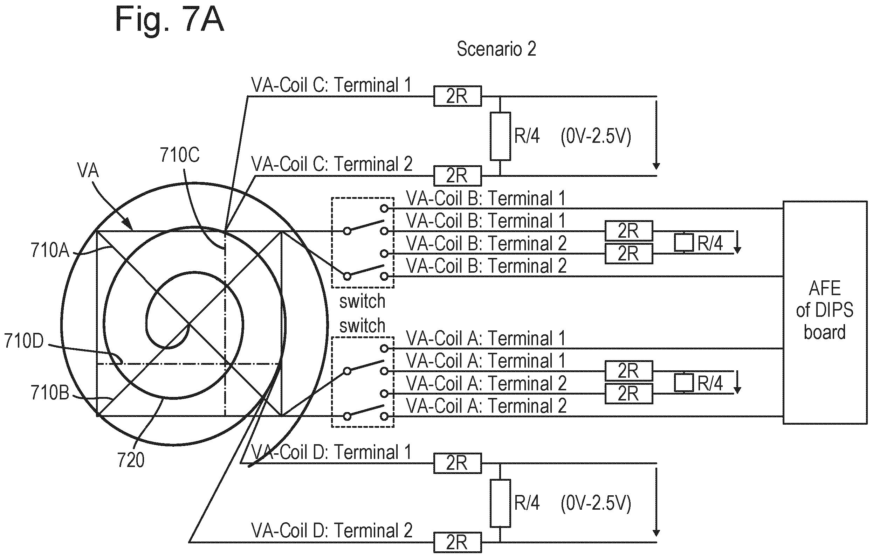

FIG. 7A illustrates another example arrangement of positioning coils. As can be seen in FIG. 7A, the positioning system includes four positioning coils 710A-D, wherein coils 710A and 710B are perpendicular to each other, coils 710C and 710D are perpendicular to each other, and coils 710A-B are rotationally offset from coils 710C-D by 45 degrees. In addition, coils 710A-B intersect at a first position relative to the WPT coil 720 (e.g., at the center of the WPT coil 720), while coils 710C-D intersect at a second position relative to the WPT coil 720 (e.g., toward the bottom right as shown in FIG. 7A).

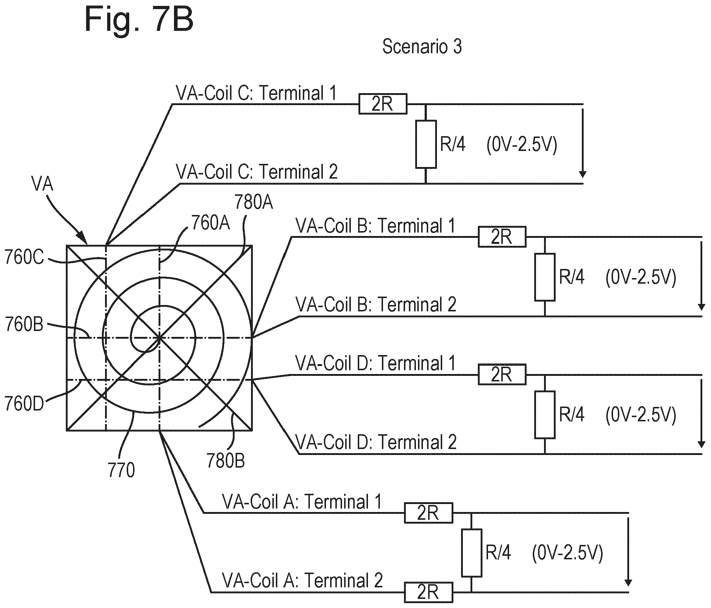

FIG. 7B illustrates another example arrangement of positioning coils. As can be seen in FIG. 7B, the positioning system includes four positioning coils 760A-D, wherein coils 760A and 760B are perpendicular to each other, and coils 760C and 760D are perpendicular to each other. Additionally coil 760A is parallel to coil 760C, and coil 760B is parallel to coil 760D. Coils 760A-B intersect at a first position relative to the WPT coil 770 (e.g., at the center of the WPT coil 770), while coils 760C-D intersect at a second position relative to the WPT coil 770 (e.g., toward the bottom left as shown in FIG. 7B). FIG. 7B also illustrates that the positioning system may include two DIPS coils 780A-B, in addition to the four positioning coils 760A-D. In this arrangement, the DIPS coils 780A-B may be used for positioning determinations while the WPT coil 770 is turned off, and positioning coils 760A-D may be used for positioning determinations while the WPT coil 770 is turned on. In this scenario, no switch is needed to switch the DIPS coils 780A-B between being connected or disconnected from respective resistor circuits.

It should be appreciated that the illustrated number and arrangement of positioning coils are for example only, and should not be understood as being the only possible number and/or arrangements. Other numbers and arrangements of coils may be used instead of or in addition to those described and illustrated herein.

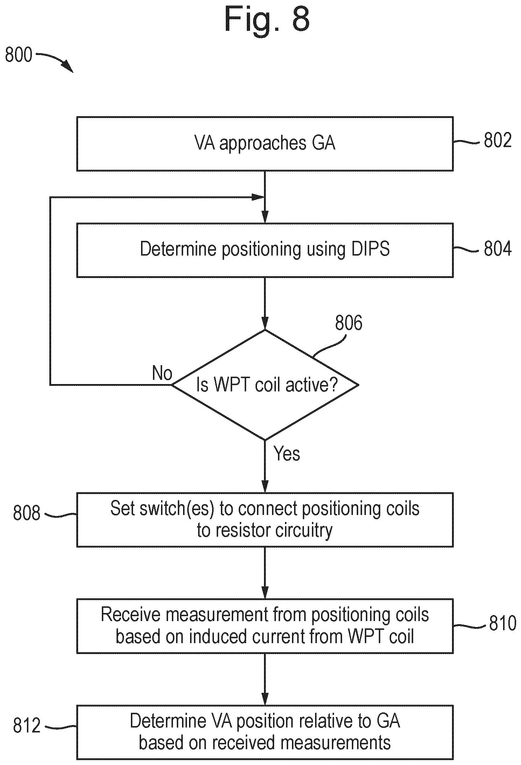

FIG. 8 illustrates a flowchart of an example process 800 of determining the position of a vehicle assembly with respect to a ground assembly using the techniques disclosed herein, in accordance with some examples of the disclosure. The process 800 may be carried out by the systems and devices described herein, and may be implemented, in whole or in part, by the devices and systems shown in FIGS. 1-7. One or more actions of the process 800 may be incorporated into or combined with one or more actions of any other process or embodiments described herein. The process 800 may be saved to a memory or storage as one or more instructions or routines that may be executed by a corresponding device or system to implement the process 800.

At step 802, the vehicle assembly approaches the ground assembly. This may include the driver of the vehicle determining that the vehicle needs to be charged and steering the vehicle toward a ground assembly of a WPT system. At step 804, the vehicle assembly and/or ground assembly perform positioning determinations using DIPS coils. The positioning determinations using the DIPS coils may be performed while the WPT coil is inactive or turned off.

At step 806, the process 800 includes determining whether the WPT coil is active or not. If the WPT coil is not active, the system can continue making positioning measurements using DIPS.

The WPT coil may then be activated, to begin transferring power from the GA to the VA. As a result, this may include determining that the WPT coil is active at step 806. At step 808, the WPT system sets the switches to the respective states such that the positioning coils are connected to the respective resistor circuits. This is shown, for example, in FIG. 4. In some examples, this may include switching the DIPS coils (e.g., coils 410A-B) to be connected to the respective resistor circuitry (e.g., circuitry 430A-B).

At step 810, the process 800 includes receiving measurements from the positioning coils. As described above, when the WPT coil is active, it induces a voltage within each of the positioning coils. The induced voltage gives rise to a measurable voltage, which is then provided to the control circuitry. At step 812, the measured voltages are used to determine the VA position relative to the GA, as described above.

In some examples, the process 800 may further include making an adjustment to the WPT system based on the determined position of the VA with respect to the GA. Additionally, it should be appreciated that one or more of the steps of process 800 may be performed in a different order than is shown. For example, in anticipation of activating the WPT coil, the system may preemptively set the switches to connect the positioning coils to the respective resistor circuits. Additionally, in some embodiments (e.g., those shown in FIGS. 7A and 7B), the positioning coils may be already connected to respective resistor circuits. As such, the process 800 may not include setting any switches.

In some embodiments, the WPT signal may be modulated (e.g., amplitude, frequency, and/or phase) to transmit information between the VA and GA. The WPT signal may act as a communication channel, in addition to transmitting power.

The systems, devices, and processes discussed above are intended to be illustrative and not limiting. One skilled in the art would appreciate that the actions of the processes discussed herein may be omitted, modified, combined, and/or rearranged, and any additional actions may be performed without departing from the scope of the invention. Furthermore, it should be noted that the features and limitations described in any one example may be applied to any other example herein, and flowcharts or examples relating to one example may be combined with any other example in a suitable manner, done in different orders, or done in parallel. In addition, the systems and methods described herein may be performed in real-time. It should also be noted that the systems and/or methods described above may be applied to, or used in accordance with, other systems and/or methods.

All of the features disclosed in this specification (including any accompanying claims, abstract, and drawings), and/or all the steps of any method or process so disclosed, may be combined in any combination, except combinations where at least some of such features and/or steps are mutually exclusive.

Each feature disclosed in this specification (including any accompanying claims, abstract, and drawings), may be replaced by alternative features serving the same, equivalent, or similar purpose unless expressly stated otherwise. Thus, unless expressly stated otherwise, each feature disclosed is one example only of a generic series of equivalent or similar features.

Throughout the description and claims of this specification, the words "comprise" and "contain" and variations of them mean "including but not limited to", and they are not intended to (and do not) exclude other moieties, additives, components, integers, or steps. Throughout the description and claims of this specification, the singular encompasses the plural unless the context otherwise requires. In particular, where the indefinite article is used, the specification is to be understood as contemplating plurality as well as singularity, unless the context requires otherwise.

The reader's attention is directed to all papers and documents which are filed concurrently with or previous to this specification in connection with this application and which are open to public inspection with this specification, and the contents of all such papers and documents are incorporated herein by reference.

**Claims**

1.    A wireless power transfer (WPT) system for charging an electric vehicle, the system comprising:

a WPT coil;
a positioning system comprising a positioning coil connected to a switch, wherein in a first switch state the switch is configured to connect the positioning coil to resistor circuitry, and in a second switch state the switch is configured to disconnect the positioning coil from the resistor circuitry; and
control circuitry configured to:

set the switch to the first switch state to connect the positioning coil to the resistor circuitry;
activate the WPT coil to induce a voltage in the positioning coil;
receive a measurement from the positioning coil; and
determine a relative position between a vehicle assembly and a ground assembly of the WPT system based on the received measurement from the positioning coil.

2.    The system of claim 1, wherein the positioning system further comprises at least three positioning coils, each connected to a respective resistor circuitry, and wherein the control circuitry is further configured to:

activate the WPT coil to induce a voltage in each of the at least three positioning coils; receive a respective measurement from each of the at least three positioning coils; and
determine the relative position between the vehicle assembly and the ground assembly of the WPT system based on the respective measurements from the at least three positioning coils.

3.    The system of claim 1 or 2, wherein the positioning system further comprises four positioning coils, each connected to a respective resistor circuitry, wherein the control circuitry is further configured to:

activate the WPT coil to induce a voltage in each of the four positioning coils;
receive a respective measurement from each of the four positioning coils; and
determine the relative position between the vehicle assembly and the ground assembly of the WPT system based on the respective measurements from the four positioning coils.

4. The system of claim 3, wherein the four positioning coils are linear in shape, wherein a first positioning coil is perpendicular to a second positioning coil of the four positioning coils, and wherein a third positioning coil is perpendicular to a fourth positioning coil of the four positioning coils.

5. The system of claim 4, wherein the first positioning coil and the second positioning coil are each rotationally offset from the third positioning coil and the fourth positioning coil by 45 degrees.

6. The system of claim 4 or 5, wherein the first positioning coil, second positioning coil, third positioning coil, and fourth positioning coil each intersect at a center of the WPT coil.

7. The system of any of claims 4-6, wherein the first positioning coil and the second positioning coil intersect at a first position with respect to the WPT coil, and wherein the third positioning coil and the fourth positioning coil intersect a second position with respect to the WPT coil, wherein the first position is different from the second position.

8. The system of any of claim 4-7, wherein the first positioning coil is parallel to the third positioning coil, and wherein the second positioning coil is parallel to the fourth positioning coil.

9. The system of any of the preceding claims, wherein the positioning coil is a first differential inductive positioning system (DIPS) coil connected to a first respective switch,

    the positioning system further comprising:
    a second DIPS coil connected to a second respective switch,
    wherein the control circuitry is further configured to:

        set the first respective switch and the second respective switch to respective first switch states to connect the first DIPS coil and the second DIPS coils to respective resistor circuitries;
        activate the WPT coil to induce a respective voltage in each of the first DIPS coil and the second DIPS coil;
        receive a respective measurement from each of the first DIPS coil and the second DIPS coil; and
        determine the relative position between the vehicle assembly and the ground assembly of the WPT system based on the received measurements from the first DIPS coil and the second DIPS coil.

10. The system of any of the preceding claims, wherein the measurement from the positioning coil comprises an amplitude of a coupling of the positioning coil to the WPT coil when the WPT coil is activated.

11. A method of performing position determination between a vehicle assembly and a ground assembly of a wireless power transfer (WPT) system for charging an electric vehicle, the method comprising:

        determining that a WPT coil is inactive;
        determining an initial position of the vehicle assembly with respect to the ground assembly using a positioning system, the positioning system comprising a positioning coil connected to a switch, wherein in a first switch state the switch is configured to connect the positioning coil to resistor circuitry, and in a second switch state the switch is configured to disconnect the positioning coil from the resistor circuitry;
        setting the switch to the first switch state, to connect the positioning coil to the resistor circuitry;
        activating the WPT coil to induce a voltage in the positioning coil;
        receiving a measurement from the positioning coil while the WPT coil is active; and
        determining a refined position between of the vehicle assembly with respect to the ground assembly of the WPT system based on the received measurement from the positioning coil.

12. The method of claim 11, further comprising:
    after determining the initial position of the vehicle assembly with respect to the ground assembly, updating the initial position based on measurements from an inertial measurement unit (IMU) of the vehicle assembly.

13. A vehicle assembly for a wireless power transfer (WPT) system for charging an electric vehicle, the vehicle assembly comprising:

        a WPT coil;

a positioning system comprising a positioning coil connected to a switch, wherein in a first switch state the switch is configured to connect the positioning coil to resistor circuitry, and in a second switch state the switch is configured to disconnect the positioning coil from the resistor circuitry; and
control circuitry configured to:

set the switch to the first switch state to connect the positioning coil to the resistor circuitry;
activate the WPT coil to induce a voltage in the positioning coil;
receive a measurement from the positioning coil; and
determine a relative position between the vehicle assembly and a ground assembly of the WPT system based on the received measurement from the positioning coil.

14. A ground assembly for a wireless power transfer (WPT) system for charging an electric vehicle, the ground assembly comprising:

a WPT coil;
a positioning system comprising a positioning coil connected to a switch, wherein in a first switch state the switch is configured to connect the positioning coil to resistor circuitry, and in a second switch state the switch is configured to disconnect the positioning coil from the resistor circuitry; and
control circuitry configured to:

set the switch to the first switch state to connect the positioning coil to the resistor circuitry;
activate the WPT coil to induce a voltage in the positioning coil;
receive a measurement from the positioning coil; and
determine a relative position between a vehicle assembly and the ground assembly of the WPT system based on the received measurement from the positioning coil.

Fig. 1

Fig. 2

## Fig. 3A

## Fig. 3B

Fig. 4

# Fig. 5A

Coupling factor of VA-A cross coil to GA-WPT coil

Initial DIPS position 510

# Fig. 5B

Coupling factor of VA-B cross coil to GA-WPT coil

Initial DIPS position 510

# Fig. 5C

Coupling factor of VA-C cross coil to GA-WPT coil

Initial DIPS position 510

# Fig. 5D

Coupling factor of VA-D cross coil to GA-WPT coil

Initial DIPS position 510

# Fig. 6

| | 610 | 620 | 630 | 640 | 650 |
|---|---|---|---|---|---|
| | VA is approaching GA | VA is is parked above GA | VA disables DIPS Positioning | VA ready for WPT | WPT is ON |
| WPT | OFF | OFF | OFF | OFF | ON |
| DIPS | ON | ON | OFF | OFF | OFF |
| DIPS on WPT | OFF | OFF | OFF | ON | ON |
| IMU | ON | ON | ON | ON | OFF |

Time

# Fig. 7A

Scenario 2

VA-Coil C: Terminal 1 — 2R — R/4 (0V-2.5V)

VA-Coil C: Terminal 2 — 2R

VA-Coil B: Terminal 1
VA-Coil B: Terminal 1 — 2R — R/4
VA-Coil B: Terminal 2 — 2R
VA-Coil B: Terminal 2

switch
switch

VA-Coil A: Terminal 1
VA-Coil A: Terminal 1 — 2R — R/4
VA-Coil A: Terminal 2 — 2R
VA-Coil A: Terminal 2

VA-Coil D: Terminal 1 — 2R — R/4 (0V-2.5V)

VA-Coil D: Terminal 2 — 2R

AFE of DIPS board

VA
710C
710A
710D
710B
720

EP 4 768 315 A1

# Fig. 7B

Scenario 3

EP 4 768 315 A1

# Fig. 8

800

VA approaches GA — 802

Determine positioning using DIPS — 804

806

No / Is WPT coil active?

Yes

808 — Set switch(es) to connect positioning coils to resistor circuitry

Receive measurement from positioning coils based on induced current from WPT coil — 810

812 — Determine VA position relative to GA based on received measurements

Europäisches
Patentamt

European
Patent Office

Office européen
des brevets

# EUROPEAN SEARCH REPORT

**Application Number**

EP 24 22 3568

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 590 574 A (HARBIN INST TECHNOLOGY SHENZHEN) 2 April 2021 (2021-04-02) | 1-3, 10-14 | INV.<br>B60L53/126 |
| A | * paragraph [0001] - paragraph [0017]; figures 1,2,3 * | 9 | B60L53/38<br>H02J50/90 |
| X | US 2015/137801 A1 (RAEDY STEVEN [US] ET AL) 21 May 2015 (2015-05-21) * paragraph [0004] - paragraph [0044]; figures 1,4,14 * | 1-14 | |
| A | US 2021/057941 A1 (WANG YANTENG [CN] ET AL) 25 February 2021 (2021-02-25) * figure 2 * | 1,11 | |
| A | US 2017/005523 A1 (WIDMER HANS PETER [CH] ET AL) 5 January 2017 (2017-01-05) * [0068] * | 12 | |

**TECHNICAL FIELDS SEARCHED (IPC)**

B60L
H02J
H04B

The present search report has been drawn up for all claims

| Place of search | Date of completion of the search | Examiner |
|---|---|---|
| The Hague | 18 June 2025 | Cuk, Vladimir |

## ANNEX TO THE EUROPEAN SEARCH REPORT
## ON EUROPEAN PATENT APPLICATION NO.

EP 24 22 3568

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2025

| Patent document cited in search report | | Publication date | Patent family member(s) | | Publication date |
|---|---|---|---|---|---|
| CN 112590574 | A | 02-04-2021 | NONE | | |
| US 2015137801 | A1 | 21-05-2015 | US | 2015137801 A1 | 21-05-2015 |
| | | | US | 2016290832 A1 | 06-10-2016 |
| US 2021057941 | A1 | 25-02-2021 | CN | 112421787 A | 26-02-2021 |
| | | | EP | 3783770 A1 | 24-02-2021 |
| | | | JP | 7091368 B2 | 27-06-2022 |
| | | | JP | 2022501983 A | 06-01-2022 |
| | | | KR | 20210024407 A | 05-03-2021 |
| | | | RU | 2727524 C1 | 22-07-2020 |
| | | | US | 2021057941 A1 | 25-02-2021 |
| | | | WO | 2021031315 A1 | 25-02-2021 |
| US 2017005523 | A1 | 05-01-2017 | US | 2017005523 A1 | 05-01-2017 |
| | | | WO | 2017003607 A1 | 05-01-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8933594 B
- US 9561730 B
- US 9561730 B2
- US 48683023
- US 11914094 B